# EUROPEAN PATENT SPECIFICATION

(11) **EP 2 219 854 B1**
(45) Date of publication and mention of the grant of the patent: **23.03.2016**
(21) Application number: 07864211.3
(22) Date of filing: 09.11.2007
(51) Int. Cl.: B29C 73/10, B29L 30/00

(54) **REPAIR PATCH FOR RADIAL TIRES**
REPARATURFLICKEN FÜR RADIALREIFEN
PIÈCE DE RÉPARATION POUR PNEUS RADIAUX

(43) Date of publication of application: 25.08.2010
(73) Proprietor: Compagnie Générale des Etablissements Michelin, 63000 Clermont-Ferrand (FR); MICHELIN Recherche et Technique S.A., 1763 Granges-Paccot (CH)
(72) Inventor: BAILEY, Rodney, R., Simpsonville SC 29681 (US); ZARAK, Cesar, Enrique, Simpsonville SC 29681 (US)
(74) Representative: Eisenführ Speiser
(86) International application number: PCT/US2007/084273
(87) International publication number: WO 2009/061324

(56) References cited:
- EP-A2- 0 025 180
- WO-A1-85/04619
- DE-A1- 1 912 469
- GB-A- 1 280 210
- US-A- 1 591 817
- US-A- 3 160 194
- US-A- 4 399 854
- US-A- 4 399 854
- US-A- 4 408 649
- US-A- 4 408 649
- US-A- 5 695 577

## Description

### BACKGROUND OF THE INVENTION

### Field of the Invention

This invention relates generally to tire repairs and more specifically, to reinforced patches useful for repairing a damaged radial tire.

### Description of the Related Art

Tire repair is an important part of maintaining the performance and value of modern tires, especially truck tires and off the road tires. The materials that are typically used to repair tires include rubber compounds, reinforced and non-reinforced rubber patches, rubber plugs, cements, cold vulcanizing fluids, chemical cleaners and sealers.

Reinforced tire repair patches are known to consist typically of cured layers of rubber compounds, reinforcements and often a thin layer of uncured rubber for bonding to the inner liner of the tire. Such a patch is disclosed in U.S. Patent No. 4,285,382, the disclosed patch having overlapping plies of reinforcing cords, a base cushion gum layer and an intermediate cushion gum layer positioned between at least two of the plies.

U.S. Patent No. 4,399,854 discloses the preamble of claims 1 and 15 and a patch for repairing a tire having at least one ply package enveloped by an unvulcanized base cushion gum layer and an unvulcanized top cushion gum layer joined at the edges of the ply package. A patch that is disclosed as useful for repairing bias ply tires includes reinforcing cords that are made of nylon or alternatively, made of polyester, polyamides or wire. The ply package includes overlapping plies of the reinforcing cords, the plies being in a criss-cross relationship with the cords of the adjacent plies positioned at substantially right angles. However, a patch that is disclosed as useful for repairing radial tires includes a ply package made up of overlapping plies of reinforcing cords that extend in substantially the same direction.

Repairs of radial tires using reinforced patches have been used for years and are known to be safe. However, one problem that is merely a perceived problem associated with radial tire repairs is that such repairs often include a bulge in the sidewall of the tire. To highway patrol officers and weigh station inspectors, these bulges may be perceived as an indication of a separation in the sidewall, resulting in a requirement to change the tire to one having no bulge.

Therefore, it would be an advantage to provide a reinforced patch for radial tires that reduces or eliminates the bulge on the sidewall of the tire after a repair.

### SUMMARY OF THE INVENTION

Embodiments of the present invention include a radial tire according to claim 1.

The patch of particular embodiments may further include a top cushion gum layer and a bottom cushion gum layer, wherein the ply package is interposed between the top and bottom cushion gum layers.

Particular embodiments of the present invention further include methods for repairing a radial tire, such methods including the steps of covering a damaged area of the radial tire with the patch described above and bonding the patch to the radial tire.

The foregoing and other objects, features and advantages of the invention will be apparent from the following more detailed descriptions of particular embodiments of the invention, as illustrated in the accompanying drawing wherein like reference numbers represent like parts of the invention.

### BRIEF DESCRIPTION OF THE DRAWING

FIG. **1** is a partial cut away top view of an exemplary radial tire repair patch in accordance with the present invention.
FIG. **2** is a top view of the ply package of the exemplary patch of FIG. **1**.
FIG. **3** is a cross sectional view of the exemplary radial tire repair patch of FIG. **1**.
FIG. **4** is a cross-sectional view of an exemplary radial tire repair patch having an intermediate rubber layer.

### DETAILED DESCRIPTION OF PARTICULAR EMBODIMENTS

The present invention provides, *inter alia*, radial tire repair patches and methods for their use. As such, the patches and methods for their use are not applicable for bias-ply tires according to embodiments of the present invention. The tire patches of particular embodiments of the present invention are useful for eliminating or reducing the bulge that typically appears on the outer surface of a radial tire that has been repaired with a patch. These patches are useful for radial tires, such radial tires including, for example, over the road radial tires for trucks, buses and so forth and off the road radial tires for earth movers, agricultural applications and so forth.

Known patches used in the industry to repair radial tires typically have one or more reinforcement plies comprising cords that are all arranged in essentially the radial direction, *i.e*., in the direction of the radial cords of the radial tire. The tires that are repaired with such patches often develop a bulge that is visible on the outer surface of the tire.

Particular embodiments of the present invention include patches that not only comprise one or more reinforcement plies having reinforcement cords that are arranged in the radial direction but also comprise one or more additional plies having reinforcement cords that are arranged essentially in the 0 degrees direction, *i.e*., that are arranged essentially orthogonally to the reinforcement cords arranged in the radial direction. Such arrangements of reinforcement plies have surprisingly shown a substantial decrease in the size of the bulge visible on the outer surface of a radial tire repaired with such patches.

Without delimiting the present invention, it is thought that the one or more reinforcement plies having reinforcement cords arranged in the radial direction provide the required reinforcement for the tire cords in the damaged area of the repaired radial tire while the one or more reinforcement plies having reinforcement cords arranged essentially in the 0 degrees direction reduce or eliminate the bulge associated with repaired radial tires.

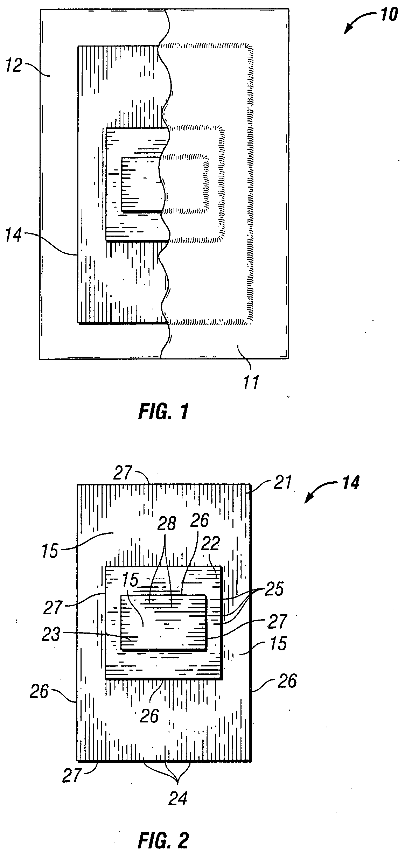

FIG. **1** is a partial cut away top view of an exemplary radial tire repair patch in accordance with the present invention. The patch **10** includes a reinforcement ply package **14** that is interposed between a top cushion gum layer **11** and a bottom cushion gum layer **12**. The bottom cushion gum layer **12** of the patch **10** is typically bonded to an interior surface of a damaged radial tire during the repair process.

In particular embodiments of the patch, the bottom cushion gum layer **12** may comprise two separate layers - a first uncured bottom layer for bonding to the repaired tire and a second cured layer superimposed thereon. Each of these layers may have a thickness, for example, of between 0.2 and 1.5 mm.

The term "cushion gum" as used herein is a term defined as a layer or skim of a rubber composition. Without limitation, the cushion gum **11**, **12** may be made of material that includes, for example, natural rubber, styrene butadiene rubber, polybutadiene or combinations thereof. The bottom **12** and top **11** cushion gum layers may be constructed of the same material or of different materials. The cushion gum may further include those materials known to one having ordinary skill in the art, such materials including, for example, one or more of the following: fillers such as carbon black, accelerators, curing agents, stearic acid, zinc oxide and anti-degradants.

In particular embodiments, the top **11** and bottom **12** cushion gum layers are each thicker than any one of the reinforcement plies **21**, **22**, **23** (FIG. **2**) that make up the reinforcement ply package **14**. These layers may have a thickness, for example, of between 0.5 and 5 mm or of between 0.8 and 3.5 mm. Both the bottom **12** and top **11** cushion gum layers extend beyond the sides of the reinforcement ply package **14**.

FIG. **2** is a top view of the ply package of the exemplary patch of FIG. **1**. The ply package **14** includes a first reinforcement ply **21** that is a tissue of first reinforcement cords **24**. A tissue includes a plurality of reinforcements cords **24** coated with a skim of rubber coating **15**. As known to those having ordinary skill in the art, the reinforcement cords **24** of a tissue may be coated with the rubber coating **15** by calendering the coating onto the plurality of reinforcement cords. The material used for the coating **15** may comprise, for example, natural rubber, styrene butadiene rubber, polybutadiene or combinations thereof although other materials may be used as appropriate for a given radial tire repair application.

The first reinforcement ply **21** includes ply ends **27** at those sides of the reinforcement ply **21** having the terminal ends of the first reinforcement cords **24** and ply edges **26** at the remaining sides of the reinforcement ply **21**.

The reinforcement cords **24** of the first reinforcement ply **21** are arranged in a radial direction and, in the exemplary embodiment of FIG. **2**, are mutually parallel. Alternatively, the reinforcement cords may be conforming, *i.e*., arranged to essentially conform to the "fan" shape of the radial cords in a radial tire, such shape being well known to one having ordinary skill in the art. Therefore, the term "cords arranged in the radial direction," as used herein, is defined as cords that are arranged essentially in the same direction as the radial cords in a radial tire and therefore include both an arrangement of cords that are disposed mutually parallel one to the other having a longitudinal axis that is the same as the longitudinal axis of a radial cord of a radial tire on which the patch is to be applied and an arrangement of cords that are disposed in a conforming arrangement.

As disclosed above, particular embodiments of the present invention may include patches having additional reinforcement plies of reinforcement cords that are arranged in the radial direction. Each of the additional reinforcement plies is superimposed on the one below, thereby forming a "stack" of reinforcement plies. Particular embodiments include, though do not require, stacks of such reinforcement plies wherein each reinforcement ply is shorter (from end to end) and less wide (from edge to edge) than the reinforcement ply below it.

The ply package **14** further includes a second reinforcement ply **22** that is a tissue of second reinforcement cords **25**. The reinforcement cords **25** are mutually parallel and extend towards the edges **26** of the first reinforcement ply **21** such that the second reinforcement cords **25** are arranged essentially in the 0 degrees direction, *i.e*., substantially orthogonal to the first reinforcement cords **24**. Substantially orthogonal is meant to include angles that are within about 5 degrees of a 90 degree angle. In particular embodiments, the second reinforcement cords **25** form an angle with the first reinforcement cords **24** of about between 85 degrees and 95 degrees or alternatively, about between 88 degrees and 92 degrees or 90 degrees.

The second reinforcement ply **22** does not extend beyond the edges or the ends of the first reinforcement ply **21.** The second reinforcement ply **22** is centered over the center of the first reinforcement ply **21**.

The ply package **14** may optionally include a third (or more, though not shown) reinforcement ply **23** that is a tissue of third reinforcement cords **28** superimposed on the second reinforcement ply **22**. The second reinforcement cords **28** are arranged essentially in the 0 degrees direction and are typically parallel to the reinforcement cords **24** of the second reinforcement ply **22**. Typically, though not required, the third reinforcement ply **23** does not extend beyond the edges or the ends of the second reinforcement ply **22**. In particular embodiments, the third reinforcement ply **23** may be centered over the center of the second reinforcement ply **22**.

The reinforcement plies having reinforcement cords that are arranged essentially in the 0 degrees direction (for example, the second **22** and third **23** reinforcement plies of FIG. **2**) may, in particular embodiments, be sized to extend between 3 and 30 mm beyond the edges of the damaged area of the radial tire being repaired. Alternatively, the reinforcement plies may extend between 5 and 25 mm, between 7 and 15 mm or between 8 and 12 mm beyond the edges of the damaged area of the radial tire being repaired.

Typically at least one of the reinforcement plies having cords arranged essentially in the 0 degrees direction may extend at least between 2 and 15 mm or between 8 and 12 mm beyond the damaged area of the radial tire being repaired. In particular embodiments, all of the reinforcement plies having cords arranged essentially in the 0 degrees direction may extend beyond the damaged area of the radial tire being repaired.

Particular embodiments of patches having multiple reinforcement plies with cords arranged essentially in the 0 degrees direction, although not delimitative of the invention, may provide that each such ply have edges and ends that are no closer than between 2 and 10 mm or between 4 and 6 mm to the ends and/or edges of adjacent such plies.

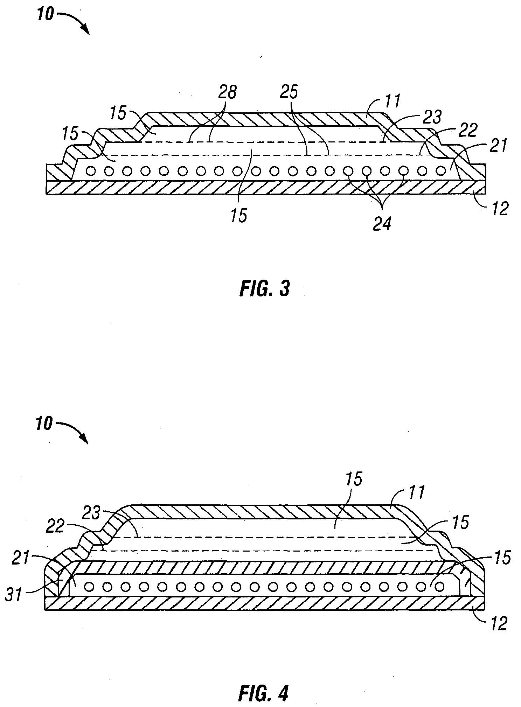

FIG. **3** is a cross sectional view of the exemplary patch of FIG. **1**. The patch **10** is an embodiment having a ply package **14** that includes the first **21**, second **22** and third **23** reinforcement plies, the first **21** ply having reinforcement cords **21** arranged in the radial direction and the second and third plies **22**, **23** having cords **25**, **28** arranged essentially in the 0 degrees direction.

Particular embodiments of the tire repair patch may further include an intermediate rubber layer between the reinforcement plies having cords arranged in the radial direction and the reinforcement plies having cords that are arranged essentially in the 0 degrees direction. Although not delimitative of the invention, the intermediate rubber layer may be about the same thickness as the bottom cushion gum layer and/or the top cushion gum layer. Optionally, the intermediate rubber layer may extend beyond the sides of the reinforcement ply package and extend, for example, to the edges of the upper and lower cushion gum layers.

Without limitation, the intermediate rubber layer may be made of the same materials as the top and/or bottom cushion gum layers or be of a different material. Typical materials of the intermediate rubber layer include, for example, natural rubber, styrene butadiene rubber, polybutadiene or combinations thereof.

FIG. **4** is a cross-sectional view of an exemplary radial tire repair patch having the intermediate rubber layer. The intermediate rubber layer **31** is disposed between the first reinforcement ply **21** having cords that are arranged in the radial direction and the second reinforcement ply **22** having cords that are arranged essentially in the 0 degrees direction. The thickness of the intermediate layer **31** shown in this exemplary embodiment is the same thickness as the bottom cushion gum layer **12**.

The reinforcement cords such as those shown in FIGS. **1-3** may be made of materials having a high elastic modulus, a low elastic modulus or combinations thereof. The modulus of elasticity of a cord at a given stress or strain is defined as the extension secant modulus calculated at the given stress or strain. The units used herein to describe the stress on a cord or the modulus of elasticity for a cord is centiNewtons per tex (cN/tex) unless otherwise denoted.

As used herein, a cord having a high elastic modulus is one having an elastic modulus of at least 600 cN/tex at 20 cN/tex of stress. A cord having a low elastic modulus is one having an elastic modulus of less than 600 CN/tex at 20 cN/tex of stress. Such measurements are taken at 20 °C to determine whether a material is of high or low elastic modulus as defined herein. Examples of materials that may be used to manufacture cords having an elastic modulus of at least 600 cN/tex at 20 cN/tex of stress include steel, aramid and hybrids such as an aramid-nylon cord. Examples of materials that may be used to manufacture cords having an elastic modulus of less than 600 cN/tex at 20 cN/tex of stress include polyester and nylon.

The reinforcement plies making up the ply package may have cords of the same material or of different materials. Examples of suitable materials include, for example, steel, aramid, polyester, rayon, nylon or hybrids. In particular embodiments, the reinforcement cords of all of the reinforcement plies may be of the same material, such as aramid or polyester or nylon. In other embodiments, the cords of the reinforcement ply having cords arranged in the radial direction may be made of a first material, *e*.*g*., aramid, while the plies having cords arranged essentially in the 0 degrees direction may be made of a second material, *e*.*g*., nylon. In another exemplary embodiment, the cords of the reinforcement ply having cords arranged in the radial direction may be made of a first material, *e.g*., polyester, while the plies having cords arranged essentially in the 0 degrees direction may be made of a second material, *e*.*g*., nylon.

In particular embodiments, a patch of the present invention may include reinforcement plies having reinforcement cords arranged in the radial direction manufactured of a material characterized as having a modulus of elasticity that is at least 600 cN/tex at 20 cN/tex of stress and include reinforcement plies having cords arranged essentially in a 0 degrees direction manufactured of a material characterized as having a modulus of elasticity that is less than 600 cN/tex at 20 cN/tex of stress. Typically, although not delimitative, the cords arranged in the radial direction have a higher modulus of elasticity than the cords arranged essentially in the 0 degree direction.

The reinforcing cords making up the reinforcement plies may be arranged from 10-40 ends per inch and be, for example, of between 840 and 6000 denier. The tissues of cords may have a thickness, for example, of between 0.2 mm and 2 mm, between 0.25 and 1 mm or upwards to about 5 mm.

The methods for using particular embodiment of the patch according to the present invention are similar to those used for standard patches currently used in the industry. For example, a reinforced patch is typically applied to the inner liner of a radial tire after preparing the damaged area of the tire. The preparation consists of several steps that include, for example, at least some of the following steps: inspection of the damaged area of the tire, removal of material from and cleaning of the damaged area, cementing the hole, filling the hole with a rubber composition, surface preparation of the inner liner, application of a rubber cement or cushion gum, drying, application of the patch, stitching of the patch and curing of the patch and/or the repair area.

During the process of repairing a radial tire with a repair patch embodiment of the present invention, a repair patch of appropriate size is selected and placed over the damaged area of the radial tire. The repair patch is placed over the damaged area so that the reinforcement cords of the repair patch that are arranged in the radial direction (see, for example, FIG. **2**) are positioned in the radial direction when the patch is applied to the sidewall of the tire. Furthermore, in particular embodiments, the patch is placed over the damaged area so that at least one or more of the reinforcement plies having cords arranged essentially in the 0 degrees direction extend beyond the boundaries of the damaged area.

While many of the patches of the present invention are rectangular in shape, the invention is not so limited. Particular embodiments may include patches that are, for example, round, hexagonal, trapezoidal or triangular as may be convenient for particular applications. The reinforcement plies that make up the patches of the present invention may assume the shape of the overall patch or may assume a different shape as may be convenient for particular applications.

The invention is further illustrated by the following examples, which are to be regarded only as illustrations and not delimitative of the invention in any way.

### Example 1

Patches having a reinforcement ply of cords arranged essentially in the 0 degrees direction were constructed and then used to repair a damaged area of a radial tire. The reduction in the bulge appearing on the outer surface of the repaired tires were compared with those on tires repaired with a witness patch having no cords arranged essentially in the 0 degree direction.

Tables **1** and **2** describe the construction of the witness patches and the Type A patches, which were similar to the witness patches except for the addition of a reinforcement ply having reinforcement cords arranged essentially in the 0 degrees direction.

**Table 1 - Witness Patch Construction**

| Layer | Material | L x W x H (mm) |
|---|---|---|
| 1 | Butyl Rubber | 185 x 95 x 1 |
| 2 | NR-BR Blend | 170 x 84 x 1 |
| 3 | Aramid Radial | 125 x 68 x 1 |
| 4 | NR-BR Blend | 170 x 84 x 1 |
| 5 | Uncured Rubber | 190 x 105 x 1 |

**Table 2 - Type A Patches with 0 degrees Cords**

| Layer | Material | L x W x H (mm) |
|---|---|---|
| 1 | Butyl Rubber | 185 x 95 x 1 |
| 2 | NR-BR Blend | 170 x 84 x 1 |
| 3 | Aramid 0 degrees | 95 x 40 x 1 |
| 4 | NR-BR Blend | 100 x 40 x 1 |
| 5 | Aramid Radial | 125 x 68 x 1 |
| 6 | NR-BR Blend | 170 x 84 x 1 |
| 7 | Uncured Rubber | 190 x 105 x 1 |

Each patch was assembled of layers that were each 1 mm thick. Each of the patches included a bottom cushion gum comprising a layer of uncured natural rubber for bonding the patch to the tire and a layer of cured rubber comprising a blend of natural rubber (NR) and butadiene rubber (BR). Each patch further included a top cushion gum comprising a top layer of inner liner material (butyl rubber) and a layer comprising the NR-BR blend.

The aramid tissues were made of aramid having two strands twisted at 315 turns per meter, each strand being 1500 denier. The cords were arranged at 106 cords per decimeter with the rubber thickness of the tissue being 0.38 mm.

The layers of the patch were arranged in the order shown in Tables 1 and 2, except for the uncured layer that was added after the rest of the patch was cured. The assembled patches were cured in membrane press (such as are available from Shaw-Almex Industries Ltd. of Canada) for nine minutes, with the press bottom plate maintained at 160 °C and the top membrane maintained at 175 °C.

The patches were then applied to tires having a damaged area that was 25 mm wide and 70 mm long. The bulge that was visible on the outer surface of the repaired tire was then measured. Measurements of the bulge height above the sidewall surface were taken before the tires were inflated and then directly after the tires were inflated. The results are shown in Table **3**.

**Table 3 - Bulge Measurements (mm)**

| | Uninflated | Inflated | Difference | % of Standard |
|---|---|---|---|---|
| Witness 1 | 0.5 | 6.1 | 5.6 | 100 |
| Witness 2 | 1.4 | 6.85 | 5.45 | 100 |
| Type A 1 | 2.0 | 5.8 | 3.8 | 68 |
| Type A 2 | 2.3 | 6.4 | 4.1 | 75 |

As shown in Table 3, the patches having the reinforcement ply having cords that were arranged essentially in the 0 degrees direction had bulges visible on the sidewall that were significantly less than the bulges of the tires repaired with the convention patches.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "shingle" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention without departing from its true spirit. The foregoing description is provided for the purpose of illustration only and should not be construed in a limiting sense. Only the language of the following claims should limit the scope of this invention.

## Claims

1. A radial tire having radial cords having a repair patch for repairing a sidewall of the radial tire covering a damaged area of the sidewall of the radial tire and bonded to the radial tire, the repair patch (10) comprising:
a ply package (14) including a first reinforcement ply (21) comprising a tissue of first reinforcement cords (24), the first reinforcement cords (24) arranged in a radial direction; a second reinforcement ply (22) superimposed on the first reinforcement ply, the second reinforcement ply comprising a tissue of second reinforcement cords (25),
wherein the second reinforcement ply (22) is centered over a center of the first reinforcement ply (21), and wherein the second reinforcement ply (22) does not extend beyond the ends (27) of the first reinforcement ply (21) **characterised in that** the second reinforcement cords are arranged essentially in a 0 degrees direction, wherein the 0 degrees direction is defined as being orthogonal to the first reinforcement cords (24) and wherein the radial direction is defined as being alignable with the radial cords.

2. The radial tire of claim 1, wherein the first reinforcement cords (24) of the repair patch are mutually parallel.

3. The radial tire of claim 1, wherein the second reinforcement cords (25) of the repair patch are mutually parallel extending towards edges (26) of the first reinforcement ply (21), forming an angle of between 85 degrees and 95 degrees to the first reinforcement cords (24) and wherein a length of the second reinforcement cords (25) is less than a distance between the edges (26) of the first reinforcement ply (21).

4. The radial tire of claim 1, the repair patch further comprising:
a top cushion gum layer (11) and a bottom cushion gum layer (12), wherein
the ply package (14) is interposed between the top (11) and bottom cushion gum layers (12).

5. The radial tire of claim 1, wherein the first (21) and second reinforcement plies (22) of the repair patch are rectilinear.

6. The radial tire of claim 1, wherein the first reinforcement ply (21) of the repair patch extends beyond the ply edges (26) of the second reinforcement ply (22) of the repair patch in all directions.

7. The radial tire of claim 1, the repair patch further comprising:
a third reinforcement ply (23) superimposed on the second reinforcement ply (22), the third reinforcement ply (23) comprising a tissue of third reinforcement cords (28) extending towards ends (27) of the second reinforcement ply (22), the third reinforcing cords (28) being arranged parallel to one another and to the second reinforcement cords (25).

8. The radial tire of claim 7, wherein the third reinforcement cords (28) of the repair patch have a length less than a distance between the ends (27) of the second reinforcement ply (22).

9. The radial tire of claim 1, **characterized in that** the cords (24) of the repair patch arranged in the radial direction have a higher modulus of elasticity than the cords (25) arranged in the 0 degrees direction.

10. The radial tire of claim 1, the repair patch further comprising:
an intermediate rubber layer (31) interposed between the first reinforcement ply (21) and the second reinforcement ply (22).

11. The radial tire of claim 10, wherein the intermediate rubber layer (31) of the repair patch extends beyond edges of the first (21) and second reinforcement plies (22).

12. The radial tire of claim 1, wherein the first reinforcement cords (24) of the repair patch are manufactured from a material characterized as having a modulus of elasticity of at least 600 cN/tex at a stress of cN/tex.

13. The radial tire of claim 1, wherein the second reinforcement cords (25) of the repair patch are manufactured from a material characterized as having a modulus of elasticity less than 600 cN/tex at a stress of 20 cN/tex.

14. The radial tire of claim 1, wherein the first (24) and second reinforcement cords (25) of the repair patch are manufactured from a material characterized as having a modulus of elasticity of at least 600 cN/tex at a stress of 20 cN/tex.

15. A method for repairing a sidewall of a radial tire, the method comprising:
covering a damaged area of the sidewall of the radial tire with a repair patch (10), and bonding the patch (10) to the radial tire; the repair patch comprising:
a ply package (14) including a first reinforcement ply (21) comprising a tissue of first reinforcement cords (24), the first reinforcement cords (24) arranged in a radial direction; a second reinforcement ply (22) superimposed on the first reinforcement ply, the second reinforcement ply comprising a tissue of second reinforcement cords (25);
wherein the second reinforcement ply (22) is centered over a center of the first reinforcement ply (21), and wherein the second reinforcement ply (22) does not extend beyond the ends (27) of the first reinforcement ply (21) aligning the first reinforcement cords to be substantially aligned with the radial cords;
**characterised in that** the second reinforcement cords are arranged essentally in a 0 degrees direction, wherein the 0 degrees direction is defined as being orthogonal to the first reinforcement cords (24) and wherein the radial direction is defined as being alignable with the radial cords.

## Patentansprüche

1. Radialreifen mit Radialcords und mit einem Reparaturflicken zum Reparieren einer Seitenwand des Radialreifens, welcher einen beschädigten Bereich der Seitenwand des Radialreifens abdeckt und mit dem Radialreifen verbunden ist, wobei der Reparaturflicken (10) aufweist:
ein Schichtpaket (14) umfassend eine erste Verstärkungsschicht (21) aufweisend ein Gewebe aus ersten Verstärkungscords (24), wobei die ersten Verstärkungscords (24) in einer radialen Richtung angeordnet sind; eine zweite Verstärkungsschicht (22), die auf der ersten Verstärkungsschicht angeordnet ist, wobei die zweite Verstärkungsschicht ein Gewebe an zweiten Verstärkungscords (25) aufweist, wobei die zweite Verstärkungsschicht (22) mittig über einem Mittelpunkt der ersten Verstärkungsschicht (21) angeordnet ist, und wobei sich die zweite Verstärkungsschicht (22) nicht über die Enden (27) der ersten Verstärkungsschicht (21) erstreckt, **dadurch gekennzeichnet, dass** die zweiten Verstärkungscords im Wesentlichen in einer 0-Grad-Richtung angeordnet sind, wobei die 0-Grad-Richtung als senkrecht zu den ersten Verstärkungscords (24) definiert ist, und wobei die radiale Richtung als mit den Radialcords ausrichtbar definiert ist.

2. Radialreifen nach Anspruch 1, wobei die ersten Verstärkungscords (24) des Reparaturflickens gegenseitig parallel sind.

3. Radialreifen nach Anspruch 1, wobei die zweiten Verstärkungscords (25) des Reparaturflickens gegenseitig parallel sind und sich in Richtung von Kanten (26) der ersten Verstärkungsschicht (21) erstrecken, wobei diese einen Winkel zwischen 85 Grad und 95 Grad mit den ersten Verstärkungscords (24) bilden, und wobei eine Länge der zweiten Verstärkungscords (25) geringer ist als ein Abstand zwischen den Kanten (26) der ersten Verstärkungsschicht (21).

4. Radialreifen nach Anspruch 1, wobei der Reparaturflicken ferner aufweist:
eine obere Kissengummilage (11) und eine untere Kissengummilage (12), wobei das Schichtpaket (14) zwischen den oberen (11) und unteren Kissengummilagen (12) angeordnet ist.

5. Radialreifen nach Anspruch 1, wobei die ersten (21) und zweiten Verstärkungsschichten (22) des Reparaturflickens rechteckig sind.

6. Radialreifen nach Anspruch 1, wobei sich die erste Verstärkungsschicht (21) des Reparaturflickens in alle Seiten hinter die Schichtkanten (26) der zweiten Verstärkungsschicht (22) des Reparaturflickens erstreckt.

7. Radialreifen nach Anspruch 1, wobei der Reparaturflicken ferner aufweist:
eine dritte Verstärkungsschicht (23), die auf der zweiten Verstärkungsschicht (22) angeordnet ist, wobei die dritte Verstärkungsschicht (23) ein Gewebe an dritten Verstärkungscords (28) aufweist, die sich in Richtung von Kanten (27) der zweiten Verstärkungsschicht (22) erstrecken, wobei die dritten Verstärkungscords (28) parallel zueinander und zu den zweiten Verstärkungscords (25) angeordnet sind.

8. Radialreifen nach Anspruch 7, wobei die dritten Verstärkungscords (28) des Reparaturflickens eine Länge haben, die geringer ist als ein Abstand zwischen den Kanten (27) der zweiten Verstärkungsschicht (22).

9. Radialreifen nach Anspruch 1, **dadurch gekennzeichnet, dass** die Cords (24) des Reparaturflickens, die in der radialen Richtung angeordnet sind, einen höheren Elastizitätsmodul aufweisen, als die Cords (25), die in der 0-Grad-Richtung angeordnet sind.

10. Radialreifen nach Anspruch 1, wobei der Reparaturflicken ferner aufweist:
eine Zwischengummilage (31), die zwischen der ersten Verstärkungsschicht (21) und der zweiten Verstärkungsschicht (22) angeordnet ist.

11. Radialreifen nach Anspruch 10, wobei sich die Zwischengummilage (31) des Reparaturflickens hinter Kanten der ersten (21) und zweiten Verstärkungsschichten (22) erstreckt.

12. Radialreifen nach Anspruch 1, wobei die ersten Verstärkungscords (24) des Reparaturflickens aus einem Material hergestellt sind, welches **dadurch gekennzeichnet ist, dass** es ein Elastizitätsmodul von wenigstens 600 cN/tex bei einer Spannung von cN/tex aufweist.

13. Radialreifen nach Anspruch 1, wobei die zweiten Verstärkungscords (25) des Reparaturflickens aus einem Material hergestellt sind, welches **dadurch gekennzeichnet ist, dass** es ein Elastizitätsmodul von weniger als 600 cN/tex bei einer Spannung von 20 cN/tex aufweist.

14. Radialreifen nach Anspruch 1, wobei die ersten (24) und zweiten Verstärkungscords (25) des Reparaturflickens aus einem Material hergestellt sind, welches **dadurch gekennzeichnet ist, dass** es ein Elastizitätsmodul von wenigstens 600 cN/tex bei einer Spannung von 20 cN/tex aufweist.

15. Verfahren zum Reparieren einer Seitenwand eines Radialreifens, wobei das Verfahren aufweist:
Bedecken eines beschädigten Bereichs der Seitenwand des Radialreifens mit einem Reparaturflicken (10) und Verbinden des Reparaturflickens (10) mit dem Radialreifen; wobei der Reparaturflicken aufweist:
ein Schichtpaket (14), umfassend eine erste Verstärkungsschicht (21), die ein Gewebe aus ersten Verstärkungscords (24) aufweist, wobei die ersten Verstärkungscords (24) in einer radialen Richtung angeordnet sind;
eine zweite Verstärkungsschicht (22), die auf der ersten Verstärkungsschicht angeordnet ist, wobei die zweite Verstärkungsschicht ein Gewebe an den zweiten Verstärkungscords (25) aufweist; wobei die zweite Verstärkungsschicht (22) mittig über einen Mittelpunkt der ersten Verstärkungsschicht (21) ausgerichtet ist, und wobei sich die zweite Verstärkungsschicht (22) nicht hinter die Kanten (27) der ersten Verstärkungsschicht (21) erstreckt,
Ausrichten der ersten Verstärkungscords, sodass diese im Wesentlichen mit den Radialcords ausgerichtet sind;
**dadurch gekennzeichnet, dass** die zweiten Verstärkungscords im Wesentlichen in einer 0-Grad-Richtung angeordnet sind, wobei die 0-Grad-Richtung als senkrecht zu den ersten Verstärkungscords (24) definiert ist, und wobei die radiale Richtung als ausrichtbar mit den Radialcords definiert ist.

## Revendications

1. Pneumatique radial ayant des câblés radiaux ayant un emplâtre de réparation d'un flanc du pneumatique radial recouvrant une région endommagée du flanc du pneumatique radial et collé au pneumatique radial, l'emplâtre (10) de réparation comprenant:
un paquet (14) de nappes incluant une première nappe (21) de renfort comprenant une étoffe de premiers câblés (24) de renfort, les premiers câblés (24) de renfort étant disposés dans une direction radiale; une deuxième nappe (22) de renfort superposée à la première nappe de renfort, la deuxième nappe de renfort comprenant une étoffe de deuxièmes câblés (25) de renfort, la deuxième nappe (22) de renfort étant centrée sur un centre de la première nappe (21) de renfort et la deuxième nappe (22) de renfort ne s'étendant pas au-delà des extrémités (27) de la première nappe (21) de renfort, **caractérisé en ce que** les deuxièmes câblés de renfort sont disposés essentiellement dans une direction à 0°, la direction à 0° étant définie comme étant orthogonale aux premiers câblés (24) de renfort et la direction radiale étant définie comme pouvant être alignée aux câblés radiaux.

2. Pneumatique radial suivant la revendication 1, dans lequel les premiers câblés (24) de renfort de l'emplâtre de réparation sont mutuellement parallèles:

3. Pneumatique radial suivant la revendication 1, dans lequel les deuxièmes câblés (25) de renfort de l'emplâtre de réparation sont mutuellement parallèles en s'étendant en direction des bords (26) de la première nappe (21) de renfort en formant un angle compris entre 85° et 95° avec les premiers câblés (24) de renfort et une longueur des deuxièmes câblés (25) de renfort est plus petite qu'une distance entre les bords (26) de la première nappe (21) de renfort.

4. Pneumatique radial suivant la revendication 1, l'emplâtre de réparation comprenant, en outre:
une couche (11) de dessus de gomme de bandage et une couche (12) de dessous de gomme de bandage, le paquet (14) de nappes étant interposé entre les couches de dessus (11) et de dessous (12) de gomme de bandage.

5. Pneumatique radial suivant la revendication 1, dans lequel les première (21) et deuxième (22) nappes de renfort de l'emplâtre de réparation sont rectilignes.

6. Pneumatique radial suivant la revendication 1, dans lequel la première nappe (21) de renfort de l'emplâtre de réparation s'étend au-delà des bords (26) de la deuxième nappe (22) de renfort de l'emplâtre de réparation dans toutes les directions.

7. Pneumatique radial suivant la revendication 1, l'emplâtre de réparation comprenant, en outre:
une troisième nappe (23) de renfort superposée à la deuxième nappe (22) de renfort, la troisième nappe (23) de renfort comprenant une étoffe de troisièmes câblés (28) de renfort s'étendant vers les extrémités (27) de la deuxième nappe (22) de renfort, les troisièmes câblés (28) de renfort étant disposés parallèlement les uns aux autres et aux deuxièmes câblés (25) de renfort.

8. Pneumatique radial suivant la revendication 7, dans lequel les troisièmes câblés (28) de renfort de l'emplâtre de réparation ont une longueur plus petite qu'une distance entre les extrémités (27) de la deuxième nappe (22) de renfort.

9. Pneumatique radial suivant la revendication 1, **caractérisé en ce que** les câblés (24) de l'emplâtre de réparation disposés dans la direction radiale ont un module d'élasticité plus grand que les câblés (25) disposés dans la direction à 0.

10. Pneumatique radial suivant la revendication 1, l'emplâtre de réparation comprenant, en outre:
une couche (31) intermédiaire en caoutchouc interposée entre la première nappe (21) de renfort et la deuxième nappe (22) de renfort.

11. Pneumatique radial suivant la revendication 10, dans lequel la couche (31) intermédiaire en caoutchouc de l'emplâtre de réparation s'étend au-delà des bords de la première (21) et de la deuxième (22) nappes de renfort.

12. Pneumatique radial suivant la revendication 1, dans lequel les premiers câblés (24) de renfort de l'emplâtre de réparation sont en un matériau caractérisé comme ayant un module d'élasticité d'au moins 600 cN/tex à une contrainte de cN/tex.

13. Pneumatique radial suivant la revendication 1, dans lequel les deuxièmes câblés (25) de renfort de l'emplâtre de réparation sont en un matériau caractérisé comme ayant un module d'élasticité plus petit que 600 cN/tex à une contrainte de 20 cN/tex.

14. Pneumatique radial suivant la revendication 1, dans lequel les premiers (24) et deuxièmes (25) câblés de renfort de l'emplâtre de réparation sont en un matériau caractérisé comme ayant un module d'élasticité d'au moins 600 cN/tex à une contrainte de 20 cN/tex.

15. Procédé de réparation d'un flanc d'un pneumatique radial, procédé dans lequel:
on recouvre une région endommagée du flanc du pneumatique radial d'un emplâtre (10) de réparation et on colle l'emplâtre (10) pneumatique radial, l'emplâtre de réparation comprenant:
un paquet (14) de nappes incluant une première nappe (21) de renfort comprenant une étoffe de premiers câblés (24) de renfort, les premiers câblés (24) de renfort étant disposés dans une direction radiale; une deuxième nappe (22) de renfort superposée à la première nappe de renfort, la deuxième nappe de renfort comprenant une étoffe de deuxièmes câblés (25) de renfort; la deuxième nappe (22) de renfort étant centrée sur un centre de la première nappe (21) de renfort et la deuxième nappe (22) de renfort ne s'étendant pas au-delà des extrémités (27) de la première nappe (21) de renfort, on aligne les premiers câblés de renfort de façon à les aligner sensiblement avec les câblés radiaux;
**caractérisé en ce que** les deuxièmes câblés de renfort sont disposés essentiellement dans une direction à 0°, la direction à 0° étant définie comme étant orthogonale aux premiers câblés (24) de renfort et la direction radiale étant définie comme pouvant être alignée aux câblés radiaux.
